# EUROPEAN PATENT APPLICATION

(11) **EP 4 354 554 A1**
(43) Date of publication of application: **17.04.2024**
(21) Application number: 22949684.9
(22) Date of filing: 05.08.2022
(51) Int. Cl.: H01M 4/62

(54) **CONDUCTIVE BINDER, PREPARATION METHOD, SECONDARY BATTERY, BATTERY MODULE, BATTERY PACK, AND ELECTRICAL DEVICE**

(71) Applicant: Contemporary Amperex Technology Co., Limited, Ningde, Fujian 352100 (CN)
(72) Inventor: LI, Cheng, Nindge, Fujian 352100 (CN); ZENG, Zipeng, Nindge, Fujian 352100 (CN); LIU, Huihui, Nindge, Fujian 352100 (CN)
(74) Representative: Jacob, Reuben Ellis
(86) International application number: PCT/CN2022/110673
(87) International publication number: WO 2024/026866

(57) **Abstract**

The present application provides a conductive binder, the conductive binder is formed by reacting polyimide with a conductive agent, and the conductive binder comprises a structural unit represented by formula I containing trifluoromethyl, 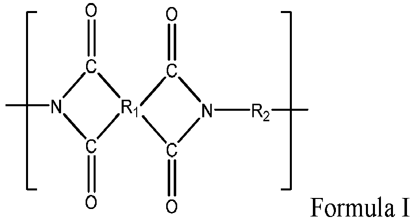 wherein, R₁ and R₂ are each independently selected from substituted C₆-C₂₅ aromatic groups. For the conductive binder, in the case of a low content of conductive agent and a low amount of conductive binder added, it can greatly reduce the membrane resistance, improve the adhesion of the electrode plate and the cycling capacity retention rate of the battery, and reduce the internal resistance increase rate of the battery in the cycling process.

## Description

### TECHNICAL FIELD

The present application relates to the technical field of secondary batteries, and in particular to a conductive binder and a preparation method, a secondary battery, a battery module, a battery pack and an electrical apparatus.

### BACKGROUND ART

In recent years, with the increasingly wide use of secondary batteries, secondary batteries are widely used in energy storage power systems such as water power, thermal power, wind power and solar power stations, as well as power tools, electric bicycles, electric motorcycles, electric vehicles, military equipment, aerospace and other fields. Due to the great development of lithium-ion batteries, higher requirements have also been put forward for their energy density, cycling performance and safety performance.

Binder is a common material in secondary batteries, widely used in battery electrode plates, separators, encapsulations, etc. At present, the most widely used binder in the positive electrode of secondary batteries is polyvinylidene fluoride (PVDF). However, polyvinylidene fluoride is expensive, and has weak adhesion and poor dispersibility; its content is high, taking up the load of the active material; and it is prone to change in volume during lithium intercalation and delithiation, thereby reducing the long-term cycling performance of the battery. Therefore, it is urgent to develop new binders with good comprehensive properties.

### SUMMARY OF THE INVENTION

The present application is made in view of the above-mentioned problems, and aims to provide a conductive binder and a positive electrode plate comprising the conductive binder, which can improve the adhesion of the electrode plate while reducing the membrane resistance of the electrode plate, thereby improving the cycling performance of the battery.

A first aspect of the present application provides a conductive binder, the conductive binder is formed by reacting polyimide with a conductive agent, and the conductive binder comprises a structural unit represented by formula I containing trifluoromethyl, 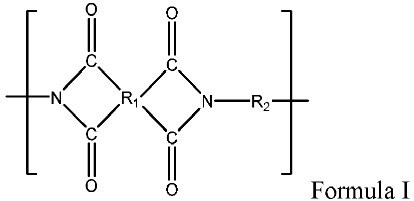 wherein, R₁ and R₂ are each independently selected from substituted C₆-C₂₅ aromatic groups.

The conductive agent is bonded with the polyimide through reaction, thereby reducing the agglomeration of the conductive agent under the action of molecular force, and improving the dispersibility of the conductive agent; meanwhile, the close bonding of the conductive agent and the polyimide is helpful for the construction of the conductive network in the binder, and improves the transmission rate of electrons. Due to the good dispersibility of the conductive agent and the easy construction of the conductive network, the conductivity of the adhesive can be greatly improved by adding a small amount of the conductive agent. The reduction of the content of the conductive agent can simultaneously reduce the amount of the binder, further increase the load of the active material in the electrode plate, and improve the performance of the battery.

For the above-mentioned conductive binder, in the case of a low content of conductive agent and a low amount of conductive binder added, it can greatly reduce the membrane resistance, improve the adhesion of the electrode plate and the cycling capacity retention rate of the battery, and reduce the internal resistance increase rate of the battery in the cycling process.

In any of embodiments, R₁ in the conductive binder is an aromatic tetracarboxylic dianhydride residue, which can be selected from

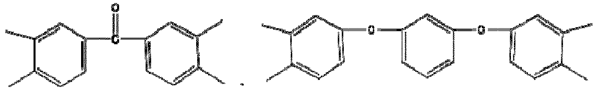

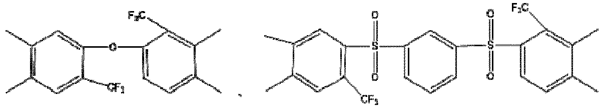

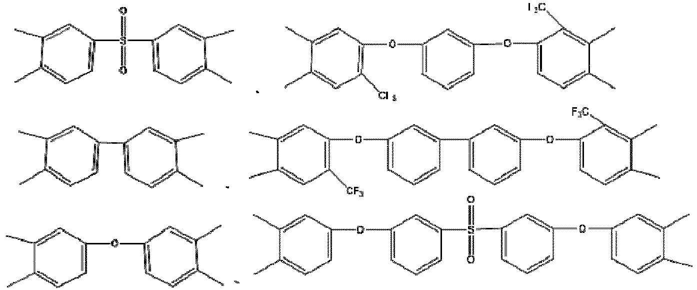

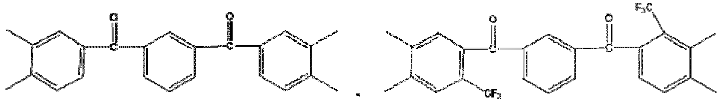

R₂ is an aromatic diamine residue, which can be selected from

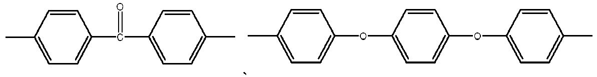

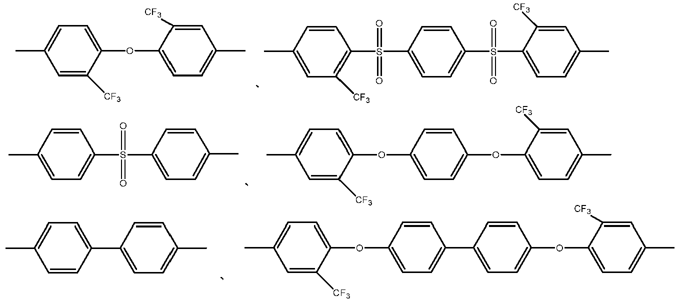

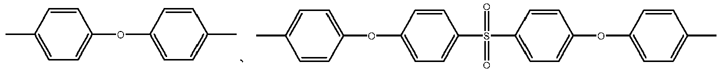

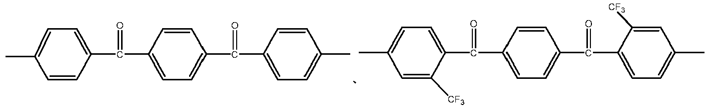

In any of embodiments, the molar content of the structural unit represented by formula I containing trifluoromethyl in the conductive binder is 20%-50%, based on the total number of moles of the structural units.

The molar content of the structural unit represented by formula I containing trifluoromethyl being within this range can make the electrode plate with the conductive binder as the binder have stronger electrode plate adhesion and lower electrode plate membrane resistance, and make the battery have a higher cycling capacity retention rate and a lower battery internal resistance increase rate.

In any of embodiments, the conductive binder further comprises a structural unit represented by formula I containing sulfonyl.

In any of embodiments, the structural unit represented by formula I containing sulfonyl can be selected from 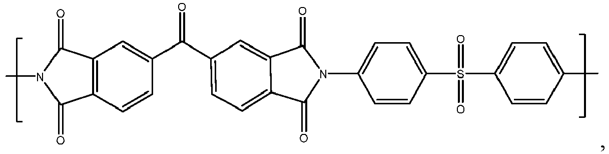 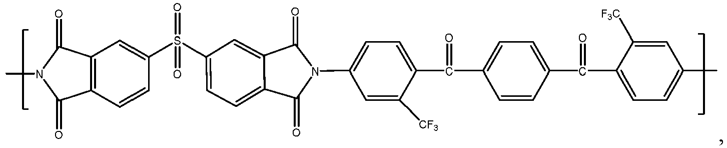 and

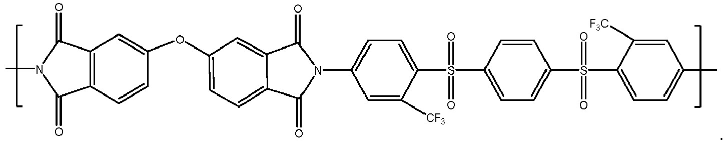

When the conductive binder also comprises the structural unit represented by formula I containing sulfonyl, the conductive binder further improves the adhesion of the electrode plate, further reduces the resistance of the electrode plate, and further improves the cycling performance of the battery.

In any of embodiments, the molar content of the structural unit represented by formula I containing sulfonyl in the conductive binder is 0.5%-30%, based on the total number of moles of the structural units.

When the molar content of the structural unit containing -SO₂- in the conductive binder is 0-30%, the conductive binder makes the electrode plate have both low electrode plate membrane resistance and high electrode plate adhesion, and makes the battery have excellent cycling performance.

In any of embodiments, the mass fraction of the conductive agent is 0.5%-15%, optionally 1.0%-12%, based on the total mass of the conductive binder.

An appropriate amount of conductive agent helps to form a conductive network in the conductive binder, increase the electron transport rate among the active materials, and maintain the integrity of the conductive network during battery cycling, thereby reducing the membrane resistance of the electrode plate and improving the cycling performance of the battery. At the same time, the addition of an appropriate amount of conductive agent can ensure that the conductive binder has sufficient bonding strength.

In any of the embodiments, the surface of the conductive agent contains carboxyl groups, and the conductive agent is selected from one or more of acetylene black, Ketjen black, conductive carbon black, conductive carbon fibers and carbon nanotubes.

The carboxyl groups on the surface of the conductive agent can react and bond with the amine groups in polyimide to reduce the large agglomeration of the conductive agent, improve the dispersibility of the conductive agent, reduce the membrane resistance, and optimize the cycling performance of the battery.

A second aspect of the present application provides a preparation method of a binder, comprising the following steps:
mixing monomers represented by formula II and formula III to prepare polyimide comprising trifluoromethyl;

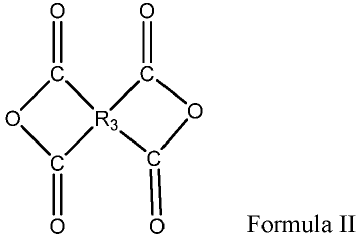

   H₂N-R₄-NH₂ Formula III
wherein, R₃ and R₄ are each independently selected from substituted C₆-C₂₅ aromatic groups;
reacting a conductive agent with the polyimide to obtain the conductive binder.

The conductive binder prepared by the method can improve the adhesion of the electrode plate, reduce the membrane resistance of the electrode plate, and improve the cycling performance of the battery.

In any of embodiments, the surface of the conductive agent contains carboxyl groups, and the mass fraction of the conductive agent is 0.5%-15%, optionally 1.0%-12%, based on the total mass of the conductive binder.

The carboxyl groups on the surface of the conductive agent can react and bond with the amino groups in polyimide to reduce the large agglomeration of the conductive agent, improve the dispersibility of the conductive agent, reduce the membrane resistance, and optimize the cycling performance of the battery.

An appropriate amount of conductive agent helps to form a conductive network, increase the electron transport rate among the active materials, and maintain the integrity of the conductive network during battery cycling, thereby reducing the membrane resistance of the electrode plate and improving the cycling performance of the battery.

In any of embodiments, the preparation of polyimide by mixing monomers represented by formula II and formula III comprises the following steps: slowly adding a monomer represented by formula II to a solution of a monomer represented by formula III to react for 4-8 h at room temperature in the presence of a catalyst in a non-reactive atmosphere to prepare the polyimide.

In any of embodiments, the reacting the conductive agent with the polyimide to obtain the conductive binder comprises the following steps: slowly adding the carboxylated conductive agent into the polyimide system to react at 105-130°C for 2-6 h, and removing by-products and the catalyst by rotary evaporation to obtain the conductive binder. A third aspect of the present application provides a positive electrode plate, including a conductive binder and a positive electrode active material. The conductive binder is the binder in any of embodiments or prepared by the preparation method in any of embodiments.

The positive electrode plate has high adhesion and low membrane resistance, can reduce the internal resistance increase rate of the battery in the cycling process, and improve the cycling capacity retention rate of the battery.

In any of embodiments, the mass ratio of the conductive binder to the positive electrode active material is 0.4:100-2.8:100.

A suitable amount of conductive binder can reduce the membrane resistance of the electrode plate and improve the adhesion of the electrode plate, thereby improving the cycling capacity retention rate of the battery and decreasing the internal resistance increase rate of the battery in the cycling process.

A fourth aspect of the present application provides a secondary battery comprising a positive electrode plate, a separator, a negative electrode plate and an electrolyte solution, wherein the positive electrode plate is the positive electrode plate according to the third aspect of the present application.

A fifth aspect of the present application provides a battery module comprising the secondary battery according to the fourth aspect of the present application.

A sixth aspect of the present application provides a battery pack including the battery module according to the fifth aspect of the present application.

A seventh aspect of the present application provides an electrical apparatus comprising at least one of the secondary batteries according to the fourth aspect, the battery module according to the fifth aspect, or the battery pack according to the sixth aspect of the present application.

### DESCRIPTION OF DRAWINGS

Fig. 1 is a schematic diagram of a secondary battery according to an embodiment of the present application.
Fig. 2 is an exploded view of the secondary battery according to an embodiment of the present application shown in Fig. 1.
Fig. 3 is a schematic diagram of a battery module according to an embodiment of the present application.
Fig. 4 is a schematic diagram of a battery pack according to an embodiment of the present application.
Fig. 5 is an exploded view of the battery pack according to an embodiment of the present application shown in Fig. 4.
Fig. 6 is a schematic diagram of an electrical apparatus in which a secondary battery is used as a power source according to an embodiment of the present application.

### Description of reference numerals:

1 battery pack; 2 upper box body; 3 lower box body; 4 battery module; 5 secondary battery; 51 case; 52 electrode assembly; 53 cover plate.

### DETAILED DESCRIPTION

Hereinafter, embodiments that specifically disclose a positive electrode active material and a preparation method thereof, as well as a positive electrode plate, a secondary battery, a battery module, a battery pack, and an electrical apparatus of the present application will be described in detail with reference to the drawings as appropriate. However, there are cases where unnecessary detailed descriptions are omitted. For example, there are cases where detailed descriptions of well-known items and repeated descriptions of actually identical structures are omitted. This is to avoid unnecessary redundancy in the following descriptions and to facilitate the understanding by those skilled in the art. In addition, the drawings and subsequent descriptions are provided for those skilled in the art to fully understand the present application, and are not intended to limit the subject matter recited in the claims.

A "range" disclosed in the present application is defined in terms of a lower limit and an upper limit, and a given range is defined by selecting a lower limit and an upper limit, which define the boundaries of the particular range. A range defined in this manner may be inclusive or exclusive of end values, and may be arbitrarily combined, that is, any lower limit may be combined with any upper limit to form a range. For example, if ranges of 60-120 and 80-110 are listed for a particular parameter, it is understood that ranges of 60-110 and 80-120 are also contemplated. Additionally, if the minimum range values 1 and 2 are listed, and if the maximum range values 3, 4 and 5 are listed, the following ranges are all contemplated: 1-3, 1-4, 1-5, 2- 3, 2-4 and 2-5. In the present application, unless otherwise state, the numerical range "a-b" represents the abbreviated representation of any combination of real numbers between a and b, where a and b are real numbers. For example, the numerical value range "0-5" indicates that all real numbers between "0-5" have been listed herein, and "0-5" is only the abbreviated representation of these numerical value combinations. Additionally, when it is stated that a certain parameter is an integer of ≥2, it is equivalent to disclosing that the parameter is, for example, an integer of 2, 3, 4, 5, 6, 7, 8, 9, 10, 11, 12, etc.

Unless otherwise specified, all embodiments and optional embodiments of the present application may be combined with each other to form new technical solutions.

Unless otherwise specified, all technical features and optional technical features of the present application may be combined with each other to form new technical solutions.

Unless otherwise specified, all steps of the present application may be performed sequentially or randomly, and preferably sequentially. For example, the method comprises steps (a) and (b), meaning that the method may comprise steps (a) and (b) performed sequentially, or may comprise steps (b) and (a) performed sequentially. For example, the reference to the method may further include step (c), meaning that step (c) may be added to the method in any order. For example, the method may include steps (a), (b) and (c), or may further include steps (a), (c) and (b), or may further include steps (c), (a) and (b), and the like.

Unless otherwise specifically stated, the "including" and "comprising" mentioned in the present application mean open-ended, or may be closed-ended. For example, the "including" and "comprising" may indicate that it is possible to include or comprise other components not listed, and it is also possible to include or comprise the only listed components.

If not specifically stated, the term "or" is inclusive in the present application. By way of example, the phrase "A or B" means "A, B, or both A and B". More specifically, the condition "A or B" is satisfied by any of the following: A is true (or present) and B is false (or absent); A is false (or absent) and B is true (or present); or both A and B are true (or present).

Polyvinylidene fluoride (PVDF) is the most commonly used traditional binder, but it has many disadvantages: for example, it has weak bonding strength, and a high amount of binder is required to achieve the bonding effect; its production raw materials are expensive and in short supply, which is not conducive to reducing the production cost of the battery; its conductivity is poor, and a large amount of conductive agent is required to improve the conductivity of the electrode plate. Especially when PVDF is used as the binder of high-nickel materials, the problems of slurry gelling and brittle electrode plate are prone to occur, and the compacted density of the electrode plate is reduced at the same time. A high amount of binder and conductive agent is required to ensure the bonding effect, but the high addition of binder and conductive agent will limit the increase of load of the active material in the electrode plate and affect the cycling performance of the battery.

### [Conductive binder]

Based on this, the present application proposes a conductive binder, which is formed by reacting polyimide with a conductive agent, and comprises a structural unit represented by formula I containing trifluoromethyl (-CF₃), 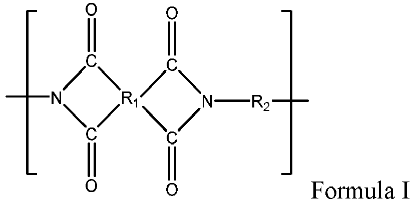 wherein, R₁ and R₂ are each independently selected from substituted C₆-C₂₅ aromatic groups.

Herein, the term "binder" refers to chemical compounds, polymers, or mixtures that form colloidal solutions or colloidal dispersions in a dispersion medium.

In some embodiments, the dispersion medium for the binder is an aqueous solvent, such as water. That is, the binder is dissolved in an aqueous solvent.

In some embodiments, the dispersion medium of the binder is an oily solvent. Examples of the oily solvent include but are not limited to dimethylacetamide, N,N-dimethylformamide, N-methylpyrrolidone, acetone, dimethyl carbonate, ethyl cellulose, polycarbonate. That is, the binder is dissolved in an oily solvent.

In some embodiments, the binder is used to hold electrode materials and/or conductive agents in place and adhere them to conductive metal parts to form electrodes.

In some embodiments, the binder is used as a positive electrode binder for bonding positive electrode active materials and/or conductive agents to form electrodes.

In some embodiments, the binder is used as a negative electrode binder for bonding negative electrode active materials and/or conductive agents to form electrodes.

Herein, the term "substituted" means that at least one hydrogen atom is substitute by a non-hydrogen group, provided that a normal valence is maintained and the substitution provides a stable compound.

Herein, the term "polyimide" refers to a polymer with an imide ring in its main chain, which may be either a prepolymer or a high polymer, and may be of any degree of polymerization.

Herein, the term "C₆-C₂₅ aromatic group" refers to an aromatic ring system having at least one ring aromatic, including but not limited to phenyl, biphenyl, indanyl, 1-naphthyl, 2-naphthyl and tetrahydronaphthyl.

Herein, substituted C₆-C₂₅ aromatic groups include, but are not limited to, aralkyl, aralkoxy, aryloxyalkyl, and symmetric or asymmetric aryl linked via carbonyl or ether groups.

In some embodiments, R₁ in the conductive binder is an aromatic tetracarboxylic dianhydride residue, which can be selected from

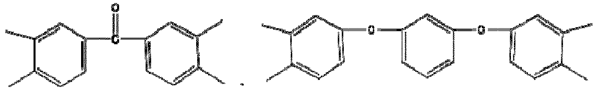

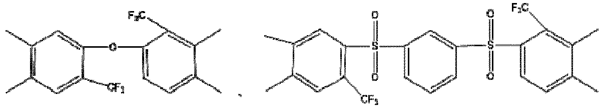

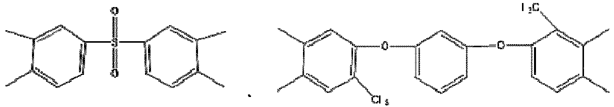

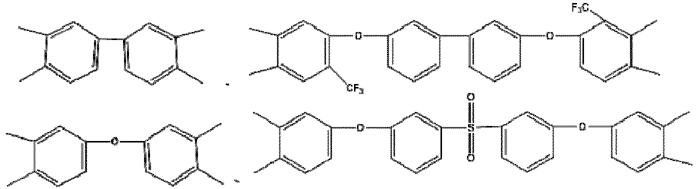

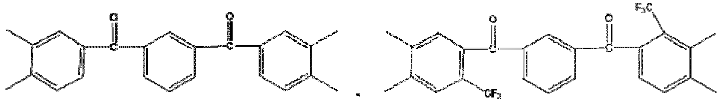

R₂ is an aromatic diamine residue, which can be selected from

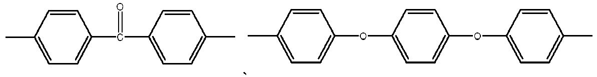

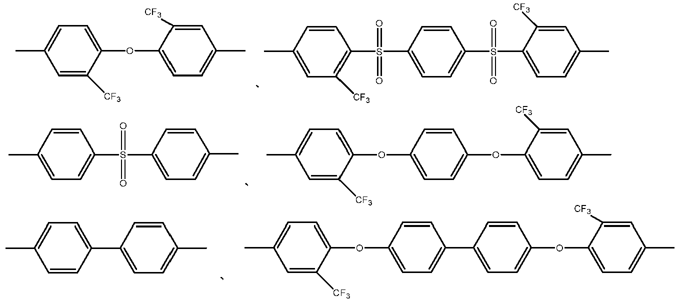

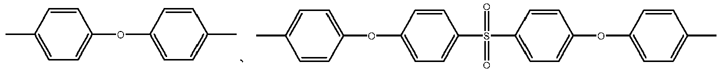

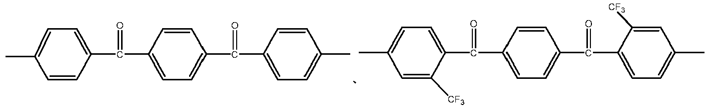

In some embodiments, the structural unit represented by formula I is formed by reacting at least one diamine monomer with at least one dianhydride monomer.

In some embodiments, R₁ comprises -CF₃ group. In some embodiments, R₂ comprises -CF₃ group. In some embodiments, both R₁ and R₂ comprise -CF₃ group.

Structural units represented by formula I containing trifluoromethyl include but are not limited to: 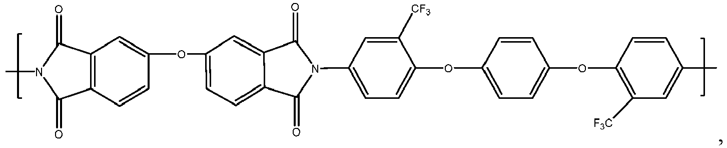 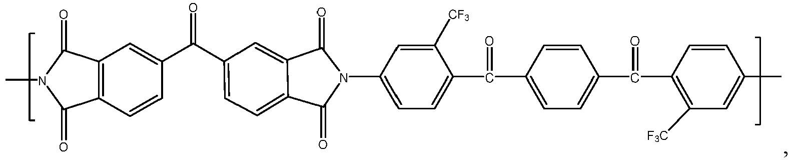 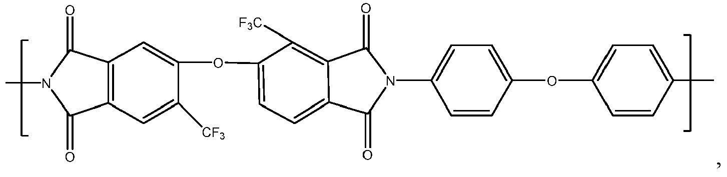 or

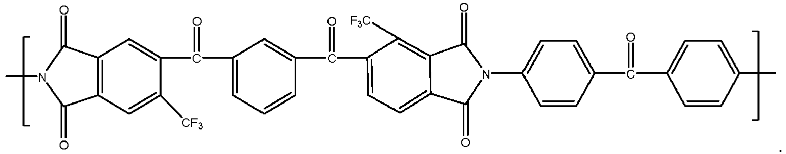

The introduction of -CF₃ can enhance the ion transfer ability of the conductive binder, improve the electrochemical stability, thermal stability and solubility in organic solvents of the conductive binder, and the fluorine element in the conductive binder can form hydrogen bonds with carboxyl and hydroxyl remaining on the surface of active materials or current collectors to further improve the adhesion of the binder.

In some embodiments, the structural unit represented by formula I contains carbonyl (-CO-) and an ether bond (-O-), so that the binder has good flexibility and can improve the bonding performance of the binder, and the cycling stability and overcharge safety of the battery.

In some embodiments, the conductive agent includes a conductive material with functional groups on its surface, so that the conductive agent and polyimide can react. In some embodiments, the functional groups are carboxyl, hydroxyl, or other reactive groups. In some embodiments, the conductive material is selected from one or more of acetylene black, Ketjen black, conductive carbon black, conductive carbon fibers and carbon nanotubes.

The polyimide that plays the role of bonding in the conductive binder is an amorphous polymer rich in polar groups, with high thermal stability and wide electrochemical window, which provides features such as good stability in the electrolyte solution, corrosion resistance, high temperature resistance and low electrolyte solution absorption rate while achieving good bonding.

The conductive agent is bonded with the polyimide through reaction, thereby reducing the agglomeration of the conductive agent under the action of molecular force, and improving the dispersibility of the conductive agent; meanwhile, the close bonding of the conductive agent and the polyimide is helpful for the forming of the conductive network, and improves the transmission rate of electrons. Due to the good dispersibility of the conductive agent and the easy construction of the conductive network, the conductive binder can greatly reduce the membrane resistance when the content of the conductive agent is low. The reduction of the content of the conductive agent can simultaneously reduce the amount of the binder required, which helps to increase the load of the active material in the electrode plate, and improve the performance of the battery.

For the above-mentioned conductive binder, in the case of a low content of conductive agent and a low amount of conductive binder added, it can greatly reduce the membrane resistance, improve the adhesion of the electrode plate and the cycling capacity retention rate of the battery, and reduce the internal resistance increase rate of the battery in the cycling process.

In some embodiments, the molar content of the structural unit represented by formula I containing trifluoromethyl in the conductive binder is 20%-50%, based on the total number of moles of the structural units.

The molar content of the structural unit represented by formula I containing trifluoromethyl being within this range can make the electrode plate with the conductive binder as the binder have stronger electrode plate adhesion and lower electrode plate membrane resistance, and make the battery have a higher cycling capacity retention rate and a lower battery internal resistance increase rate.

In some embodiments, the conductive binder further comprises a structural unit represented by formula I containing sulfonyl (-SO₂-).

In some embodiments, the structural units represented by formula I containing sulfonyl (-SO₂-) include but are not limited to:

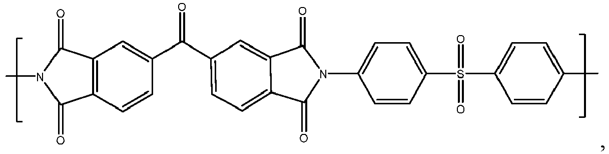

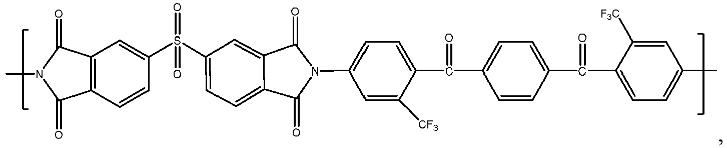

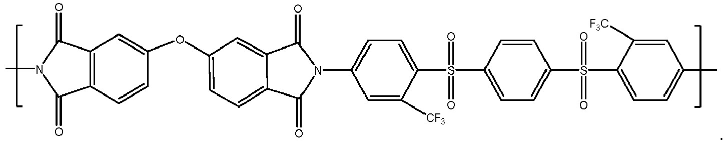

The structural formula of the sulfonyl is as follows

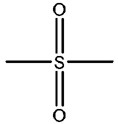

In some embodiments, R₁ comprises -SO₂- group. In some embodiments, R₂ comprises -SO₂- group. In some embodiments, both R₁ and R₂ comprise -SO₂- group.

The -SO₂- has strong electron-absorbing effect and hygroscopicity, which can enhance the binding ability of lithium ions in the electrode plate and the active material, thereby improving the adhesion of the electrode plate. At the same time, the sulfonyl can improve the absorption of the electrode plate to the electrolyte solution, thereby reducing the impedance of the battery. Also, the sulfonyl can enhance the stability of the polyimide conjugated structure, improve the structural stability of the binder during the charging and discharging process of the electrode, thereby improving the cycling performance.

When the conductive binder also comprises the structural unit represented by formula I containing sulfonyl, the conductive binder further improves the adhesion of the electrode plate, further reduces the resistance of the electrode plate, and further improves the cycling performance of the battery.

In some embodiments, the molar content of the structural unit represented by formula I containing sulfonyl in the conductive binder is 0.5%-30%, based on the total number of moles of the structural units.

In some embodiments, the molar content of the structural unit represented by formula I containing sulfonyl in the conductive binder is 1%, 5%, 10%, 15%, 20%, 25% or 30%, based on the total number of moles of the structural units.

Excessive content of structural units containing -SO₂- will reduce the adhesion retention rate of the electrode plate during the long cycling process, and the absorption of a large amount of electrolyte solution will lead to swelling of the binder and deteriorate the cycling performance of the battery.

When the molar content of the structural unit containing -SO₂- in the conductive binder is 0-30%, the conductive binder makes the electrode plate have both low membrane resistance and high adhesion, and makes the battery have excellent cycling performance.

In some embodiments, based on the total mass of the conductive binder, the mass fraction of the conductive agent is 0.5%-15%. In some embodiments, based on the total mass of the conductive binder, the mass fraction of the conductive agent is 1.0%-12%. In some embodiments, the mass fraction of the conductive agent can be any one of 0.5%, 1%, 1.5%, 2%, 2.5%, 3%, 3.5%, 4%, 4.5%, 5%, 5.5%, 6%, 6.5%, 7%, 7.5%, 8%, 8.5%, 9%, 9.5%, 10%, 10.5%, 11%, 11.5%, and 12%, based on the total mass of the conductive binder.

If the content of the conductive agent is too low, the interface resistance of the coating will be high, which will affect the conductivity of the electrode plate and increase the membrane resistance. If the content of the conductive agent is too high, the corresponding polyimide content is less, which will affect the adhesion of the electrode plate.

An appropriate amount of conductive agent helps to form a conductive network in the conductive binder, increase the electron transport rate among the active materials, and maintain the integrity of the conductive network during battery cycling, thereby reducing the membrane resistance of the electrode plate and improving the cycling performance of the battery. At the same time, the addition of an appropriate amount of conductive agent can ensure that the conductive binder has sufficient bonding strength.

In some embodiments, the surface of the conductive agent contains carboxyl groups.

In some embodiments, the conductive agent is selected from one or more of acetylene black, Ketjen black, conductive carbon black, conductive carbon fibers and carbon nanotubes.

In some embodiments, the carboxyl groups on the surface of the conductive material can be formed by acidification of the conductive material. In some embodiments, the carboxyl groups on the surface of the conductive material may remain during the preparation of the conductive material.

The carboxyl groups on the surface of the conductive agent can react with the amine groups in polyimide for fixing to reduce the agglomeration of the conductive agent, improve the dispersibility of the conductive agent, reduce the membrane resistance, and improve the cycling performance of the battery.

In some embodiments, the polyimide has a weight average molecular weight of 5×10⁵-7×10⁵.

Herein, the term "weight average molecular weight" refers to the statistical average molecular weight obtained by averaging the weights of molecules with different molecular weights in the polymer.

Within a certain range, the increase of the weight average molecular weight contributes to the improvement of the cohesion and adhesion of the binder. If the weight average molecular weight is too low, the polymer chain segment is short, the chain segment cannot form a network, and the adhesion will be reduced.

Controlling the weight average molecular weight of the polyimide can ensure the viscosity of the conductive binder, so that the electrode plate using the conductive binder containing polyimide as the binder has improved bonding performance and cycling performance.

In some embodiments, the median diameter D50 of the conductive binder particles is 5-20 um.

Herein, the term "D50" refers to the corresponding particle size when the cumulative particle size distribution percentage of a sample reaches 50%. Its physical meaning is that the particles with a particle size larger than it account for 50%, and the particles smaller than it also account for 50%. D50 is also called the median particle size or average particle size.

Appropriate particle median diameter D50 helps to increase the dissolution rate of the conductive binder in the solvent and improve the processing efficiency of the electrode plate.

In an embodiment of the present application, there is provided a preparation method of a binder, comprising the following steps: mixing monomers represented by formula II and formula III to prepare polyimide comprising -CF₃;

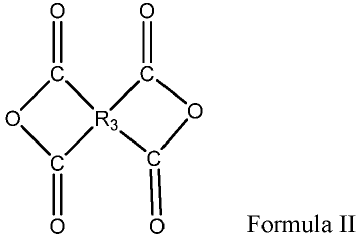

H₂N-R₄-NH₂ Formula III

wherein, R₃ and R₄ are each independently selected from substituted C₆-C₂₅ aromatic groups; and
reacting a conductive agent with polyimide to obtain a conductive binder.

In some embodiments, the monomer represented by formula II is one or more of 3,3',4,4'-benzophenone tetracarboxylic dianhydride, 4,4'-oxydiphthalic anhydride, 3,3',4,4'-diphenylsulfone tetracarboxylic dianhydride, 2,2'-bistrifluoromethyl-3,3',4,4'-diphenyl ether tetracarboxylic dianhydride, 1,4-bis(2-trifluoromethyl-3,3',4,4'-benzophenone tetracarboxylic dianhydride)benzene, 1,4-bis(2-trifluoromethyl-4,4'-benzoyltetracarboxylic dianhydride)benzene, 1,4-bis(2-trifluoromethyl-3,3',4,4'-diphenylsulfone tetracarboxylic dianhydride)benzene, 1,4-bis(2-trifluoromethyl-4,4'-oxydiphthalic anhydride)benzene, and 3,3',4,4'-biphenyltetracarboxylic dianhydride.

In some embodiments, the monomer represented by formula III is one or more of 4,4'-diaminobenzophenone, 4,4'-diaminodiphenyl ether, 4,4'-diaminodiphenyl sulfone, 2,2'-bistrifluoromethyl-4,4'-diaminodiphenyl, 1,4-bis(2-trifluoromethyl-4-aminobenzoyl)benzene, 1,4-bis(4-aminobenzoyl)benzene, 1,4-bis(2-trifluoromethyl-4-aminophenylsulfonyl)benzene, 1,4-bis(4-amino-2-trifluoromethylphenoxy)benzene, 1,3-bis(4-aminophenoxy)benzene, 1,4-bis(4-amino-2-trifluoromethylphenoxy)biphenyl, and 4,4'-bis(4-aminophenoxy)diphenylsulfone.

The conductive binder prepared by the method can improve the adhesion of the electrode plate, reduce the membrane resistance of the electrode plate, and improve the cycling performance of the battery.

In some embodiments, the surface of the conductive agent contains carboxyl groups, and the mass fraction of the conductive agent is 0.5%-15%, optionally 1.0%-12%, based on the total mass of the conductive binder.

In some embodiments, based on the total mass of the conductive binder, the mass fraction of the conductive agent can be any one of 0.5%, 1%, 1.5%, 2%, 2.5%, 3%, 3.5%, 4%, 4.5%, 5%, 5.5%, 6%, 6.5%, 7%, 7.5%, 8%, 8.5%, 9%, 9.5%, 10%, 10.5%, 11%, 11.5%, and 12%.

With an appropriate amount of conductive agent, it can form a conductive network, increase the electron transport rate among the active materials, and maintain the integrity of the conductive network during battery cycling, thereby reducing the membrane resistance of the electrode plate and improving the cycling performance of the battery while ensuring sufficient bonding strength of the conductive binder.

In some embodiments, the preparation of polyimide by mixing monomers represented by formula II and formula III comprises the following steps: slowly adding a monomer represented by formula II to a solution of a monomer represented by formula III to react for 4-8 h at room temperature in the presence of a catalyst in a non-reactive gas atmosphere to prepare polyimide.

It can be understood that a non-reactive gas refers to a gas that does not react with reactants in the reaction system, and common non-reactive gases may include, for example, inert gases such as argon, and nitrogen.

In some embodiments, the reacting the conductive agent with the polyimide to obtain the conductive binder comprises the following steps: slowly adding the carboxylated conductive agent into the polyimide system to react at 105-130°C for 2-6 h, and removing by-products and the catalyst by rotary evaporation to obtain the conductive binder. The slow addition of the conductive agent treated by carboxylation in the polyimide system can improve the dispersibility of the conductive agent in the conductive binder, avoid large agglomeration of the conductive agent, and improve the conductivity of the conductive binder.

In some embodiments, the carboxylated conductive agent is slowly injected into the polyimide system through a syringe.

### [Positive electrode plate]

In an embodiment of the present application, provided is a positive electrode plate, which comprises a positive current collector and a positive electrode film layer arranged on at least one surface of the positive current collector, wherein the positive electrode film layer comprises a positive electrode active material and the conductive binder in any of embodiments or the conductive binder prepared by the preparation method in any of embodiments.

The positive electrode plate has high adhesion and low membrane resistance, can maintain a high internal resistance increase rate of the battery and a high cycling capacity retention rate in the cycling process.

In some embodiments, the mass ratio of the conductive binder to the positive electrode active material is 0.4:100-2.8:100. In some embodiments, the mass ratio of the conductive binder to the positive electrode active material is 0.6:100, 0.8:100, 1.0:100, 1.2:100, 1.4:100, 1.6:100, 1.8:100, 2:100, 2.2:100, 2.4:100, 2.6:100.

When the content of the conductive binder in the electrode plate is too low, sufficient bonding effect cannot be achieved. On the one hand, a sufficient amount of the conductive agent and the positive electrode active material cannot be bonded together, and the adhesion of the electrode plate is small, resulting in de-molding of the electrode plate during processing or diffusion of the active material to the negative electrode during the long cycling process of the battery, causing a great safety hazard. On the other hand, the conductive binder cannot form a tight coating with the surface of the positive electrode active material, resulting in reduction of the above-mentioned beneficial effects of the conductive binder, and even greatly reduced conductivity of the conductive binder.

On the contrary, when the content of the conductive binder is too high, too much conductive binder adheres to the positive electrode active material, which hinders the transmission of lithium ions in the positive electrode active material, making it difficult for lithium ions to be released or intercalated, but increasing the membrane resistance of the electrode plate, resulting in an increase in battery impedance. Excessive conductive binder will also reduce the load of the positive electrode active material in the electrode plate, resulting in decreased energy density of the battery, increasing the swelling rate of the electrode plate in the electrolyte solution, and further increasing the DC resistance of the battery.

A suitable amount of conductive binder can reduce the membrane resistance of the electrode plate and improve the adhesion of the electrode plate, thereby improving the cycling capacity retention rate of the battery and decreasing the internal resistance increase rate of the battery in the cycling process.

As an example, the positive electrode current collector has two opposite surfaces in its own thickness direction, and the positive electrode film layer is arranged on either or both of the two opposite surfaces of the positive electrode current collector.

In some embodiments, the positive electrode current collector can be a metal foil or a composite current collector. For example, an aluminum foil can be used as the metal foil. The composite current collector may include a high molecular material substrate layer and a metal layer formed on at least one surface of the high molecular material substrate layer. The composite current collector can be formed by forming a metal material (aluminum, aluminum alloy, nickel, nickel alloy, titanium, titanium alloy, silver and silver alloy, etc.) on a high molecular material substrate (such as polypropylene (PP), polyethylene terephthalate (PET), polybutylene terephthalate (PBT), polystyrene (PS), and polyethylene (PE)).

In some embodiments, the positive electrode active material may be a positive electrode active material for batteries well known in the art. As an example, the positive electrode active material may include at least one of the following materials: a lithium-containing phosphate of olivine structure, a lithium transition metal oxide, and a respective modified compound thereof. However, the present application is not limited to these materials, and other conventional materials useful as positive electrode active materials for batteries can also be used. These positive electrode active materials may be used alone or in combination of two or more thereof. Here, examples of the lithium transition metal oxide may include, but are not limited to, at least one of a lithium-cobalt oxide (such as LiCoO₂), lithium-nickel oxide (such as LiNiO₂), lithium-manganese oxide (such as LiMnO₂ and LiMn₂O₄), lithium-nickel-cobalt oxide, lithium-manganese-cobalt oxide, lithium-nickel-manganese oxide, lithium-nickel-cobalt-manganese oxide (such as LiNi_{1/3}Co_{1/3}Mn_{1/2}O₂ (also abbreviated as NCM₃₃₃), LiNi_{0.5}Co_{0.2}Mn_{0.3}O₂ (also abbreviated as NCM₅₂₃), LiNi0_{.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁), lithium-nickel-cobalt-aluminum oxide (such as LiNi_{0.85}Co_{0.15}Al_{0.05}O₂) and their respective modified compounds. Examples of the lithium-containing phosphate with olivine structure may include, but are not limited to, at least one of lithium iron phosphate (such as LiFePO₄ (also abbreviated as LFP)), lithium iron phosphate-carbon composite, lithium manganese phosphate (such as LiMnPO₄), lithium manganese phosphate-carbon composite, lithium manganese iron phosphate, and lithium manganese iron phosphate-carbon composite.

In some embodiments, the positive electrode plate can be prepared by dispersing the components for preparing the positive electrode plate, for example, the positive electrode active material, the conductive binder and any other components in a solvent (for example, N-methyl pyrrolidone) to form a positive electrode slurry; and coating the positive electrode slurry on a positive electrode current collector, followed by oven drying, cold pressing and other procedures, to obtain the positive electrode plate.

### [Negative electrode plate]

The negative electrode plate includes a negative electrode current collector and a negative electrode film layer arranged on at least one surface of the negative electrode current collector, wherein the negative electrode film layer includes a negative electrode active material.

As an example, the negative electrode current collector has two opposite surfaces in its own thickness direction, and the negative electrode film layer is provided on either one or both of the two opposite surfaces of the negative electrode current collector.

In some embodiments, the negative electrode current collector can be a metal foil or a composite current collector. For example, a copper foil can be used as the metal foil. The composite current collector may include a high molecular material substrate layer and a metal layer formed on at least one surface of the high molecular material substrate. The composite current collector can be formed by forming a metal material (copper, copper alloy, nickel, nickel alloy, titanium, titanium alloy, silver and silver alloy, etc.) on a high molecular material substrate (such as polypropylene (PP), polyethylene terephthalate (PET), polybutylene terephthalate (PBT), polystyrene (PS), and polyethylene (PE)).

In some embodiments, a negative electrode active material for the battery well known in the art can be used as the negative electrode active material. As an example, the negative electrode active material may include at least one of the following materials: artificial graphite, natural graphite, soft carbon, hard carbon, silicon-based material, tin-based material, and lithium titanate, etc. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and other conventional materials useful as negative electrode active materials for batteries can also be used. These negative electrode active materials may be used alone or in combination of two or more thereof.

In some embodiments, the negative electrode film layer further optionally comprises a binder. The binder may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally comprises a conductive agent. The conductive agent may be selected from at least one of superconducting carbon, acetylene black, carbon black, Ketjen black, carbon dot, carbon nanotube, graphene, and carbon nanofiber.

In some embodiments, the negative electrode film layer may further optionally comprise other auxiliaries, for example, a thickener (e.g., sodium carboxymethyl cellulose (CMC-Na)) and the like.

In some embodiments, the negative electrode plate can be prepared as follows: dispersing the components for preparing the negative electrode plate, for example, the negative electrode active material, the conductive agent, the binder and any other components in a solvent (for example, deionized water) to form a negative electrode slurry; and coating the negative electrode slurry on a negative electrode current collector, followed by oven drying, cold pressing and other procedures, to obtain the negative electrode plate.

### [Electrolyte]

The electrolyte plays the role of conduct ions between the positive electrode plate and the negative electrode plate. The type of the electrolyte is not particularly limited in the present application, and can be selected according to requirements. For example, the electrolyte may be in a liquid, gel, or full solid state.

In some embodiments, an electrolyte solution is used as the electrolyte. The electrolyte solution comprises an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalate)borate, lithium difluoro bis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate ethyl propionate, propyl propionate, methyl butyrate, ethyl butyrate, 1,4-butyrolactone, sulfolane, dimethyl sulfone, methyl ethyl sulfone and diethyl sulfone.

In some embodiments, the electrolyte solution further optionally comprises an additive. For example, the additive may include a negative electrode film-forming additive, a positive electrode film-forming additive, and may also include additives that can improve certain battery properties, such as additives that improve battery overcharge performance, additives that improve battery high or low temperature performance, and the like.

### [Separator]

In some embodiments, the secondary battery also comprises a separator. The type of the separator is not particularly limited in the present application, and any well-known separator with a porous structure having good chemical stability and mechanical stability may be selected.

In some embodiments, the material of the separator can be selected from at least one of glass fiber, non-woven cloth, polyethylene, polypropylene, and polyvinylidene fluoride. The separator may be a single-layer film or a multi-layer composite film, and is not particularly limited. When the separator is a multi-layer composite film, the material of each layer may be the same or different, which is not particularly limited.

### [Secondary battery]

In an embodiment of the present application, provided is a secondary battery comprising an electrode assembly and an electrolyte solution, wherein the electrode assembly includes the positive electrode plate, the separator, and the negative electrode plate of any of embodiments.

In some embodiments, the positive electrode plate, the negative electrode plate, and the separator can be made into an electrode assembly by a winding process or a stacking process.

In some embodiments, the secondary battery may include an outer package. The outer package can be used to encapsulate the above-mentioned electrode assembly and electrolyte.

In some embodiments, the outer package of the secondary battery may be a hard shell, e.g., a hard plastic shell, an aluminum shell, a steel shell, etc. The outer package of the secondary battery may also be a soft pack, such as a bag-type soft pack. The material of the soft package can be plastic, and as plastic, polypropylene, polybutylene terephthalate, and polybutylene succinate can be enumerated.

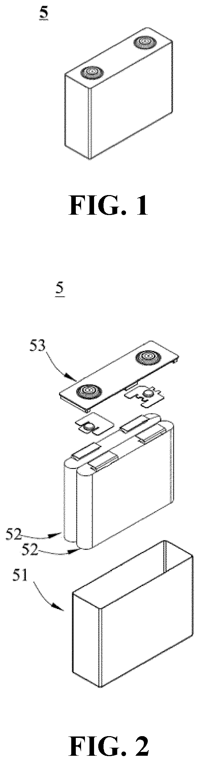

The present application has no particular limitation on the shape of the secondary battery, which can be cylindrical, square or of any other shape. For example, Fig. 1 shows a secondary battery 5 with a square structure as an example.

In some embodiments, referring to Fig. 2, the outer package may comprise a case 51 and a cover plate 53. Here, the case 51 can include a bottom plate and a side plate connected to the bottom plate, with the bottom plate and the side plate enclosing to form an accommodating cavity. The case 51 has an opening that communicates with the accommodating cavity, and the cover plate 53 may cover the opening to close the accommodating cavity. The positive electrode plate, the negative electrode plate, and the separator may be formed into an electrode assembly 52 by a winding process or a stacking process. The electrode assembly 52 is encapsulated within the accommodating cavity. The electrolyte solution impregnates the electrode assembly 52. The number of electrode assemblies 52 comprised in the secondary battery 5 may be one or more, which can be selected by those skilled in the art according to specific actual requirements.

### [Battery module]

In some embodiments, the secondary batteries may be assembled into a battery module, and the number of the secondary batteries included in the battery module may be one or more, and the specific number may be selected by those skilled in the art according to the application and capacity of the battery module.

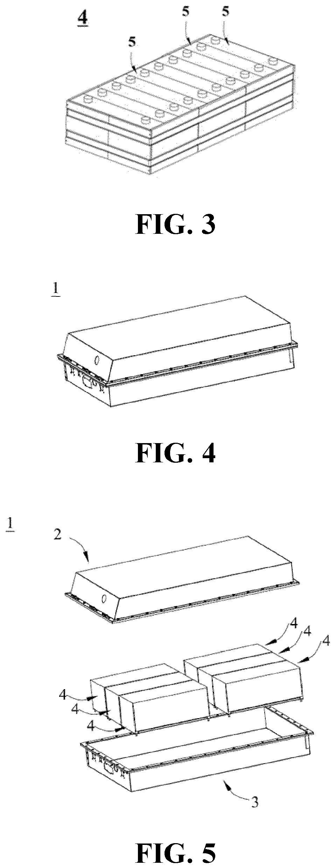

Fig. 3 shows a battery module 4 as an example. Referring to Fig. 3, in the battery module 4, multiple secondary batteries 5 may be sequentially arranged along the length direction of the battery module 4. Of course, any other arrangements are also possible. The plurality of secondary batteries 5 may further be fixed by fasteners.

Optionally, the battery module 4 can further include a case having an accommodating space, in which the plurality of secondary batteries 5 are accommodated.

### [Battery pack]

In some embodiments, the battery module may further be assembled into a battery pack, the number of battery module contained in the battery pack may be one or more, and the specific number can be selected by those skilled in the art according to the use and capacity of the battery pack.

Figs. 4 and 5 show a battery pack 1 as an example. Referring to Figs. 4 and 5, the battery pack 1 may comprise a battery box and a plurality of battery modules 4 provided in the battery box. The battery box includes an upper box 2 and a lower box 3, the upper box 2 can cover the lower box 3 to form a closed space for accommodating the battery modules 4. The plurality of battery modules 4 may be arranged in the battery box in any manner.

### [Electrical apparatus]

In an embodiment of the present application, an electrical apparatus is provided, which includes at least one selected from the secondary battery according to any of embodiments, the battery module according to any of embodiments, or the battery pack according to any of embodiments.

The electrical apparatus comprises at least one of the secondary batteries, the battery module, or the battery pack provided in the present application. The secondary battery, battery module, or battery pack can be used as a power source for the electrical apparatus, and can also be used as an energy storage unit for the electrical apparatus. The electrical apparatus may include, but is not limited to, a mobile device (such as a mobile phone, and a laptop, etc.), an electric vehicle (such as an all-electric vehicle, a hybrid electric vehicle, a plug-in hybrid electric vehicle, an electric bicycle, an electric scooter, an electric golf cart, and an electric truck, etc.), an electric train, a ship, a satellite, an energy storage system, etc.

For the electrical apparatus, the secondary battery, the battery module, or the battery pack may be selected according to its use requirements.

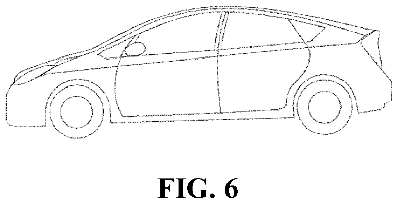

Fig. 6 is an example of an electrical apparatus. The electrical apparatus is an all-electric vehicle, a hybrid electric vehicle, a plug-in hybrid electric vehicle, or the like. In order to meet the requirements of the electrical apparatus for high power and high energy density of secondary batteries, a battery pack or a battery module may be used.

As another example, the apparatus may be a mobile phone, a tablet, a laptop, etc. The apparatus is generally required to be light and thin, and may use a secondary battery as a power source.

### Examples

Examples of the present application will be described hereinafter. The examples described below are exemplary and only used to explain the present application, and are not to be construed as limiting the present application. Where specific techniques or conditions are not specified in the examples, the techniques or conditions described in the literature of the art or the product specifications are followed. Where manufacturers are not specified, the reagents or instruments used are conventional products and are commercially available.

### Example 1

### 1) Preparation of conductive binder

Preparation of polyimide: To a 500 ml three-neck flask, 10 mmol of 1,4-bis(4-amino-2-trifluoromethylphenoxy)phenylenediamine monomer (6FAPB) was added, 250 ml of m-cresol was added, the mixture was stirred for a period of time to make it completely dissolved, then a catalyst isoquinoline at 3% by volume of the solvent was added; 10 mmol of 3,3',4,4'-benzophenone tetracarboxylic dianhydride monomer (BTDA) was slowly added to the above solution in batches, wherein the solid content in the reaction system was 15%; the reaction system was stirred at room temperature for 6 h under nitrogen atmosphere to obtain polyimide.

Among them, the structural formula of 1,4-bis(4-amino-2-trifluoromethylphenoxy)benzene monomer (6FAPB) is:

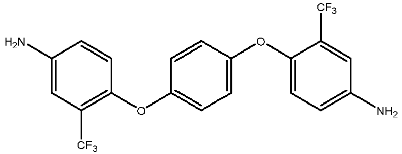

Among them, the structural formula of 3,3',4,4'-benzophenone tetracarboxylic dianhydride monomer (BTDA) is:

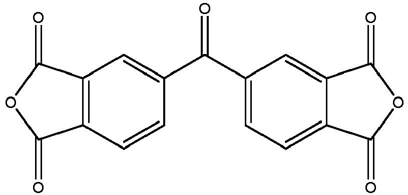

Preparation of conductive binder: Carboxylated carbon nanotubes with a mass fraction of 5% (based on the total mass of the conductive binder) were dispersed in N-methylpyrrolidone (NMP) solvent with a purity of 98% using a high-pressure homogenizer, injected into the above-mentioned polyimide system through a syringe, and left to further react at 120°C for 4 h; under the condition of negative pressure at 100°C-120°C, the reaction by-product water and the catalyst were removed by rotary evaporation, thereby obtaining the conductive binder.

The above-mentioned carboxylated carbon nanotubes were prepared by the following method:
According to the material formula of 2.0 g of carbon nanotubes, 220 ml of concentrated sulfuric acid with a mass fraction of 98%, and 47 ml of concentrated hydrochloric acid with a mass fraction of 37.5%, the carbon nanotubes were placed in a 500 ml Erlenmeyer flask, then concentrated sulfuric acid and concentrated hydrochloric acid were added, and the mixture was sonicated at 60°C for 8 h with a power of 500 W. After the mixture was cooled to room temperature, 300 ml of deionized water was added for dilution, and the purified carbon nanotubes were washed with absolute ethanol several times, and centrifuged until the pH value was 5-6. Next, the system was dried at 120°C for 12 h, then extracted with tetrahydrofuran at 80°C for 24 h, dried at 70°C for 2 h, dried at 110°C for 1 h, and ground to obtain carboxylated carbon nanotubes.

### 2) Preparation of positive electrode plate

The conductive binder prepared in Example 1 and the active substance nickel cobalt manganese (NCM) at a weight ratio of 1.6:100 were well stirred and mixed in a solution of 60 g of N-methyl pyrrolidone (NMP) to obtain a positive electrode slurry. Then, the positive electrode slurry was uniformly coated on a positive electrode current collector, and then oven dried, cold pressed, and slit to provide a positive electrode plate with a compacted density of 3.4g/cc.

### 3) Preparation of negative electrode plate

An active material artificial graphite, a conductive agent carbon black, a binder styrene butadiene rubber (SBR), and a thickener sodium hydroxymethyl cellulose (CMC-Na) were dissolved in a solvent deionized water at a weight ratio of 96.2:0.8:0.8: 1.2. The solution was sufficiently mixed to prepare a negative electrode slurry. The negative electrode slurry was uniformly coated on a copper foil of the negative electrode current collector once or more than once, oven dried, cold pressed, and slit to provide a negative electrode plate.

### 4) Separator

### A polypropylene film was used as the separator.

### 5) Preparation of electrolyte solution

In a glove box in an argon atmosphere (H₂O<0.1ppm, O₂<0.1ppm), an organic solvent of ethylene carbonate (EC)/ethyl methyl carbonate (EMC) was mixed uniformly in a volume ratio of 3/7, a lithium salt LiPF₆ was added to dissolve in the organic solvent and stirred uniformly to prepare a 1M LiPF₆ EC/EMC solution, thereby obtaining the electrolyte solution of Example 1.

### 6) Preparation of battery

The positive electrode plate, the separator and the negative electrode plate in Example 1 were stacked in sequence, so that the separator was positioned between the positive electrode plate and the negative electrode plate and functioned to separate, and then a bare battery cell was obtained by winding, a tab was welded to the bare battery cell, the bare battery cell was put into an aluminum case, baked at 80°C to remove water, and then the electrolyte solution was injected, and an uncharged battery was obtained after sealing. The uncharged battery then went through procedures such as standing, hot and cold pressing, chemical formation, reshaping and capacity testing successively to obtain the battery product of Example 1.

The batteries of Examples 2 to 5 were prepared by a similar method to the battery of Example 1. The total amount of the diamine monomer added was maintained at 10 mmol, part of 6FAPB was replaced by 1,3-bis(4-aminophenoxy) benzene monomer (APB 134) to adjust the molar content of the monomer containing -CF₃ relative to the total amount of the monomers. 6FAPB accounts for 48.8% of the total amount of diamine monomers in Example 2, 6FAPB accounts for 47.6% of the total amount of diamine monomers in Example 3, 6FAPB accounts for 20% of the total amount of diamine monomers in Example 4, and 6FAPB accounts for 10% of the total amount of diamine monomers in Example 5. The specific parameters are as shown in Table 1.

Among them, the structural formula of 1,3-bis(4-aminophenoxy) benzene (APB 134) is:

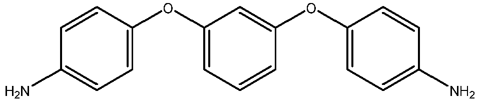

The batteries of Examples 6-9 were prepared by a similar method to the battery of Example 1, but the mass fraction of the conductive agent relative to the total mass of the conductive binder was adjusted. The specific parameters are shown in Table 1.

The batteries of Examples 10-15 were prepared by a similar method to the battery of Example 1, but the mass ratio of the conductive binder to the active material was adjusted, and the specific parameters are shown in Table 1.

The batteries of Examples 16-29 were prepared by a similar method to the battery of Example 1, but the diamine monomers added during the preparation of polyimide were 4,4'-diaminodiphenyl sulfone (DDS) and 1,4-bis(4-amino-2-trifluoromethylphenoxy)benzene (6FAPB), the dianhydride monomer was 3,3',4,4'-benzophenone tetracarboxylic dianhydride (BTDA), and the mass ratio of the conductive binder to the active material was adjusted to 1.2:100. The specific parameters are shown in Table 1, and the preparation method is as follows:
The structural formula of 4,4'-diaminodiphenylsulfone (DDS) is:

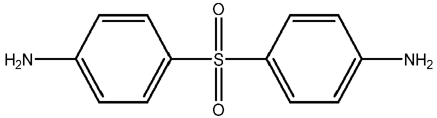

In Examples 16-19, the total amount of diamine monomers added was maintained at 10 mmol, and the molar ratio of DDS and 6FAPB added was adjusted so as to adjust the molar ratio of structural units containing -CF₃ and structural units containing -SO₂-. The specific parameters are shown in Table 1.

The batteries of Examples 20-25 were prepared by a similar method to the battery of Example 16, but the mass ratio of the conductive binder to the active material was adjusted, and the specific parameters are shown in Table 1.

The batteries of Examples 26-27 were prepared by a similar method to the battery of Example 17, but the mass ratio of the conductive binder to the active material was adjusted, and the specific parameters are shown in Table 1.

The batteries of Examples 28-29 were prepared by a similar method to the battery of Example 18, but the mass ratio of the conductive binder to the active material was adjusted, and the specific parameters are shown in Table 1.

The battery of Comparative Example 1 was prepared by a similar method to the battery of Example 1, but the binder polyimide polymer and the conductive agent carbon nanotubes were prepared by mixing and stirring, and no reaction occurred. The preparation method of polyimide is as follows:
Preparation of polyimide: To a 500 ml three-neck flask, 10 mmol of 1,4-bis(4-amino-2-trifluoromethylphenoxy)phenylenediamine monomer (6FAPB) was added, 250 ml of m-cresol was added, the mixture was stirred for a period of time to make it completely dissolved, then a catalyst isoquinoline at 3% by volume of the solvent was added; 10 mmol of 3,3',4,4'-benzophenone tetracarboxylic dianhydride monomer (BTDA ) was slowly added to the above solution in batches, wherein the solid content in the reaction system was 15%; the reaction system was stirred at room temperature for 6 h under nitrogen atmosphere, further heated to 180°C and stirred for 8 h under nitrogen atmosphere to obtain polyimide.

The battery of Comparative Example 2 was prepared by a similar method to the battery and polyimide of Example 1, but in the preparation process of the polyimide polymer, 6FAPB was replaced by 1,3-bis(4-aminophenoxy) benzene (APB134).

The batteries of Comparative Examples 3-4 were prepared by a similar method to the battery of Comparative Example 1, but the binder was PVDF binder, the PVDF binder was purchased from Solvay (Shanghai) Co., Ltd., and the mass of carbon nanotubes added in Comparative Example 3 was 5% relative to the total mass of carbon nanotubes and PVDF; the mass of carbon nanotubes added in Comparative Example 4 was 55% relative to the total mass of carbon nanotubes and PVDF; the specific parameters are shown in Table 1.

In addition, the conductive binders, electrode plates and batteries obtained in the above-mentioned Examples 1-29 and Comparative Examples 1-4 were subjected to performance tests. The test results are shown in Table 1, and the test methods are as follows:

### I. Bind performance tests

### 1. Test of types of functional groups of polymers

Using the pellet transmission method, the sample was subjected to pelletizing with KBr. The KBr background blank was deducted by the transmission method to obtain the test spectrum of the sample. Instrument model: Nicolet 5700 (U.S. Thermo Nicolet), standard linearity: better than 0.07%, resolution: 0.09 cm⁻¹, wavenumber range: 400-4000 cm⁻¹, sensitivity <9.65*10⁻⁵Abls. It is used to detect the structure and chemical bonds of molecules.

### II. Battery performance test

### 1. Electrode plate performance test

### 1) Test of electrode plate compacted density

A battery electrode plate roller press (model: LDHY800-ND60, purchased from Xingtai Naknor Electrode Plate Rolling equipment Co., Ltd.) was used. Compacted density (g/cm³) = (one-side coating weight/area of small disc) *(total thickness of electrode plate - thickness of aluminum foil)/2. According to the compacted density formula, because the coating weight is consistent, the pressure of the roller press was adjusted from low pressure to high pressure. This proceeded until the tested electrode plate pressure met the requirements.

### 2) Electrode plate membrane resistance test

The electrode plate was cut into 3*3 mm small discs at the left, middle and right. The indicator light of the Iesttech electrode plate resistance instrument was turned on, the sample was put at the appropriate position of the "probe" of the membrane resistance instrument, the "start" button was clicked, and the result was read when the reading became stable. Two positions were tested for each small disc, and the average value of six measurements was finally calculated, which is the membrane resistance of the electrode plate.

### 3) Electrode plate adhesion test

The positive electrode plate was cut into test samples with a size of 20*100 mm for later use. The side of the sample to be tested was bonded with double-sided adhesive tape, and compacted with a press roller, so that the double-sided adhesive tape and the sample were completely attached. The other side of the double-sided adhesive tape of the sample was stuck to the stainless steel surface, and one end of the sample was bent in the opposite direction with a bending angle of 180°. The sample was tested using the Gotech tensile machine, the stainless steel end was fixed to the lower fixture of the tensile machine, the bent end of the sample was fixed to the upper fixture, and the angle of the sample was adjusted to ensure that the upper and lower ends were in a vertical position. Then, the sample was stretched at a speed of 50 mm/min until the sample was completely peeled off from the substrate. The displacement and force during this process were recorded. It is generally considered that the force at force equilibrium is the adhesion of the electrode plate.

### 3. Battery performance test

### 1) Battery cycling retention rate test

The testing process of the battery capacity retention rate was as follows: at 25°C, the prepared battery 1 was charged to 4.3V at a constant current of 1/3C, and then charged to a current of 0.05C at a constant voltage of 4.3V, laid aside for 5 min, and then discharged to 2.8V at 1/3C. The resulting capacity was denoted as an initial capacity C0. The above steps were repeated for the same battery above, and at the same time, the discharge capacity Cn of the battery after the n-th cycle was recorded, then the battery capacity retention rate after each cycle Pn=Cn/C0*100%; with the 100 point values of P1, P2...... P 100 as the ordinates, and the corresponding cycle numbers as the abscissas, a graph of battery capacity retention rate vs cycle number was obtained. During the test, the first cycle corresponded to n = 1, the second cycle corresponded to n = 2, ...... and the 100th cycle corresponded to n = 100. The data of battery capacity retention rate corresponding to the examples or comparative examples in Table 1 was the data measured after 500 cycles under the above test conditions, that is, the value of P500. The test procedures for the comparative examples and other examples were the same as above.

### 2) Battery DC impedance test

The testing process of the battery DC impedance was as follows: at 25°C, the prepared battery was charged to 4.3V at a constant current of 1/3C, and then charged to a current of 0.05C at a constant voltage of 4.3V, and laid aside for 5 min. Then, the voltage was denoted as V1. Then, the battery was discharged at 1/3C for 30 s, the voltage was denoted as V2, and (V2-V1)/1/3C, thus providing an internal resistance DCR1 of the battery after the first cycle. The above steps were repeated for the same battery as mentioned above, and the internal resistance DCRn (n=1, 2, 3, ..., and 100) of the battery after the n-th cycle was recorded. A graph of the battery discharge DCR and the number of cycles was obtained with the 100 point values of DCR1, DCR2, DCR3, ..., and DCR100 as the ordinates, and with the corresponding number of cycles as the abscissas.

During the test, the first cycle corresponded to n = 1, the second cycle corresponded to n = 2, ...... and the 100th cycle corresponded to n = 100. In Table 1, the internal resistance increase rate of the battery=(DCRn-DCR1)/DCR1*100%, and the testing processes in the comparative examples and other examples were the same as above. The data in Table 1 was the data measured after 100 cycles under the above test conditions.

The conductive binders, electrode plates and batteries obtained in the above-mentioned Examples 1-29 and Comparative Examples 1-4 were subjected to performance tests. The results are shown in Table 1.

### III. Test result analysis for the examples and comparative examples

The batteries of the examples and comparative examples were respectively prepared according to the above method, and measured for various performance parameters. The results are shown in Table 1 below.

**Table 1: Parameters and performance tests of Examples 1-29 and Comparative Examples 1-4**

| No. | Conductive binder | Polyimide | | | | Conductive agent | Mass ratio of conductive binder to active material | Electrode plate | | Battery performance | |
|---|---|---|---|---|---|---|---|---|---|---|---|
| | | Diamine monomer | Dianhydride monomer | Molar content of structural unit containing -CF₃ | Molar content of structural unit containing -SO₂- | Mass fraction | | Membrane resistance (Ω) | Adhesion (N/m) | Cycling capacity retention rate | Internal resistance increase rate |
| Example 1 | (6FAPB-BTDA polyimide)-carboxylated carbon nanotubes | 6FAPB | BTDA | 50.0% | 0 | 5.00% | 1.6:100 | 0.85 | 15.9 | 88.40% | 50.10% |
| Example 2 | (6FAPB-APB 134-BTDA polyimide)-carboxylated carbon nanotubes | 6FAPB, APB 134 | BTDA | 48.8% | 0 | 5.00% | 1.6:100 | 0.87 | 15.3 | 86.80% | 55.30% |
| Example 3 | (6FAPB-APB 134-BTDA polyimide)-carboxylated carbon nanotubes | 6FAPB, APB 134 | BTDA | 47.6% | 0 | 5.00% | 1.6:100 | 0.89 | 14.2 | 86.40% | 54.90% |
| Example 4 | (6FAPB-APB 134-BTDA polyimide)-carboxylated carbon nanotubes | 6FAPB, APB 134 | BTDA | 20.0% | 0 | 5.00% | 1.6:100 | 0.9 | 13.3 | 84.90% | 65.20% |
| Example 5 | (6FAPB-APB 134-BTDA polyimide)-carboxylated carbon nanotubes | 6FAPB, APB 134 | BTDA | 100% | 0 | 5.00% | 1.6:100 | 1.05 | 10.4 | 84.20% | 70.10% |
| Example 6 | (6FAPB-BTDA polyimide)-carboxylated carbon nanotubes | 6FAPB | BTDA | 50.0% | 0 | 0.50% | 1.6:100 | 1.5 | 17.3 | 83.80% | 73.50% |
| Example 7 | (6FAPB-BTDA polyimide)-carboxylated carbon nanotubes | 6FAPB | BTDA | 50.0% | 0 | 1.00% | 1.6:100 | 1.39 | 16.7 | 87.60% | 52.10% |
| Example 8 | (6FAPB-BTDA polyimide)-carboxylated carbon nanotubes | 6FAPB | BTDA | 50.0% | 0 | 12.00% | 1.6:100 | 0.5 | 14.2 | 87.90% | 51.50% |
| Example 9 | (6FAPB-BTDA polvimide)-carboxylated carbon nanotubes | 6FAPB | BTDA | 50.0% | 0 | 15.00% | 1.6:100 | 0.37 | 13.0 | 85.10% | 62.40% |
| Example 10 | (6FAPB-BTDA polyimide)-carboxylated carbon nanotubes | 6FAPB | BTDA | 50.0% | 0 | 5.00% | 0.4:100 | 1.21 | 10.5 | 84.30% | 69.70% |
| Example 11 | (6FAPB-BTDA polyimide)-carboxylated carbon nanotubes | 6FAPB | BTDA | 50.0% | 0 | 5.00% | 0.8:100 | 0.98 | 11.6 | 85.90% | 55.80% |
| Example 12 | (6FAPB-BTDA polyimide)-carboxylated carbon nanotubes | 6FAPB | BTDA | 50.0% | 0 | 5.00% | 1.2:100 | 0.86 | 13.6 | 86.80% | 55.40% |
| Example 13 | (6FAPB-BTDA polyimide)-carboxylated carbon nanotubes | 6FAPB | BTDA | 50.0% | 0 | 5.00% | 2.0:100 | 0.8 | 17.7 | 87.60% | 52.50% |
| Example 14 | (6FAPB-BTDA polyimide)-carboxylated carbon nanotubes | 6FAPB | BTDA | 50.0% | 0 | 5.00% | 2.4:100 | 0.74 | 19.9 | 86.50% | 54.70% |
| Example 15 | (6FAPB-BTDA polyimide)-carboxylated carbon nanotubes | 6FAPB | BTDA | 50.0% | 0 | 5.00% | 2.8:100 | 0.67 | 23.3 | 85.10% | 63.90% |
| Example 16 | (6FAPB-DDS-BTDA polyimide)-carboxylated carbon nanotubes | 6FAPB, DDS | BTDA | 37.5% | 1250% | 5.00% | 1.2:100 | 0.84 | 17.4 | 90.40% | 43.40% |
| Example 17 | (6FAPB-DDS-BTDA polyimide)-carboxylated carbon nanotubes | 6FAPB, DDS | BTDA | 25.0% | 25.00% | 5.00% | 1.2:100 | 0.78 | 17.2 | 88.10% | 50.80% |
| Example 18 | (6FAPB-DDS-BTDA polyimide)-carboxylated carbon nanotubes | 6FAPB, DDS | BTDA | 20.0% | 3000% | 5.00% | 1.2:100 | 0.74 | 17.3 | 87.50% | 52.00% |
| Example 19 | (6FAPB-DDS-BTDA polyimide)-carboxylated carbon nanotubes | 6FAPB, DDS | BTDA | 15.0% | 3500% | 5.00% | 1.2:100 | 0.69 | 16.7 | 84.90% | 65.30% |
| Example 20 | (6FAPB-DDS-BTDA polyimide)-carboxylated carbon nanotubes | 6FAPB, DDS | BTDA | 37.5% | 1250% | 5.00% | 0.4:100 | 1.14 | 13.2 | 84.40% | 68.10% |
| Example 21 | (6FAPB-DDS-BTDA polyimide)-carboxylated carbon nanotubes | 6FAPB, DDS | BTDA | 37.5% | 1250% | 5.00% | 0.8:100 | 0.98 | 15.7 | 87.80% | 53.50% |
| Example 22 | (6FAPB-DDS-BTDA polyimide)-carboxylated carbon nanotubes | 6FAPB, DDS | BTDA | 37.5% | 12.50% | 5.00% | 1.6:100 | 0.77 | 19.6 | 89.20% | 47.80% |
| Example 23 | (6FAPB-DDS-BTDA polyimide)-carboxylated carbon nanotubes | 6FAPB, DDS | BTDA | 37.5% | 12.50% | 5.00% | 2.0:100 | 0.7 | 21.3 | 88.60% | 49.30% |
| Example 24 | (6FAPB-DDS-BTDA polyimide)-carboxylated carbon nanotubes | 6FAPB, DDS | BTDA | 37.5% | 1250% | 5.00% | 2.4:100 | 0.64 | 23.7 | 88.30% | 47.90% |
| Example 25 | (6FAPB-DDS-BTDA polyimide)-carboxylated carbon nanotubes | 6FAPB, DDS | BTDA | 37.5% | 1250% | 5.00% | 2.8 100 | 0.56 | 26.1 | 86.50% | 55.40% |
| Example 26 | (6FAPB-DDS-BTDA polyimide)-carboxylated carbon nanotubes | 6FAPB, DDS | BTDA | 25.0% | 25.0% | 5.00% | 0.4:100 | 1.24 | 13.3 | 84.10% | 72.30% |
| Example 27 | (6FAPB-DDS-BTDA polyimide)-carboxylated carbon nanotubes | 6FAPB, DDS | BTDA | 25.0% | 25.0% | 5.00% | 2.8 100 | 0.72 | 25.1 | 86.10% | 56.50% |
| Example 28 | (6FAPB-DDS-BTDA polyimide)-carboxylated carbon nanotubes | 6FAPB, DDS | BTDA | 20.0% | 30.0% | 5.00% | 0.4:100 | 1.35 | 13 | 83.90 | 75.30% |
| Example 29 | (6FAPB-DDS-BTDA polyimide)-carboxylated carbon nanotubes | 6FAPB, DDS | BTDA | 20.0% | 30.0% | 5.00% | 2.8 100 | 0.8 | 25 | 85.80% | 54.70% |
| Comparative Example 1 | (6FAPB-DDS-BTDA polyimide), carbon nanotubes | 6FAPB | BTDA | 50.0% | 0 | 5.00% | 1.6:100 | 1.67 | 14.7 | 81.40% | 97.10% |
| Comparative Example 2 | (APB134-BTDA polyimide)-carboxylated carbon nanotubes | APB 134 | BTDA | 0 | 0 | 5.00% | 1.6:100 | 1.17 | 8.7 | 80.50% | 100.20% |
| Comparative Example 3 | PVDF, carbon nanotubes | - | - | - | - | 5.00% | 1.6:100 | 1.69 | 10.3 | 82.30% | 94.30% |
| Comparative Example 4 | PVDF, carbon nanotubes | - | - | - | - | 55.60% | 4.5:100 | 0.87 | 10 | 83.70% | 89.20% |

According to the above results, it can be seen that the conductive binder in Examples 1-29 is formed by the reaction of polyimide and the conductive agent, the conductive binder comprises a structural unit shown in the following formula, and the structural unit contains -CF₃.

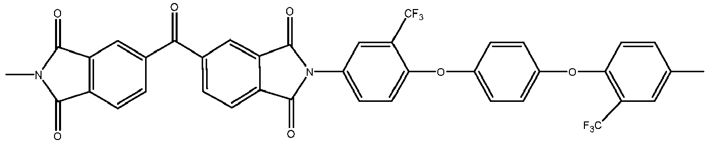

As can be seen from the comparison of Examples 1-5 and Comparative Examples 2 and 3, for the above-mentioned conductive binder, in the case of a low content of conductive agent and a low amount of conductive binder added, it can greatly reduce the membrane resistance, improve the adhesion of the electrode plate and the cycling capacity retention rate of the battery, and reduce the internal resistance increase rate of the battery in the cycling process.

From the comparison of Examples 1-5 and Comparative Examples 1 and 2, it can be seen that the reaction of polyimide and carbon nanotubes can greatly reduce the membrane resistance of the electrode plate, and an electrode plate with low membrane resistance can be obtained with low addition of carboxylated carbon nanotubes, which avoids agglomeration caused by the addition of a large amount of carbon nanotubes, thereby improving the cycling capacity retention rate and internal resistance increase rate of the battery.

From the comparison of Examples 1-4 and Example 5, it can be seen that based on the total number of moles of the structural units, when the molar content of the structural unit represented by the above formula containing trifluoromethyl in the conductive binder is 20%-50%, the membrane resistance of the electrode plate is further reduced, the adhesion is further improved, and the cycling performance of the battery is further improved.

It can be seen from Example 1 and Examples 6-9 that based on the total mass of the conductive binder, when the mass fraction of the conductive agent is 0.5%-15%, the conductive binder makes the adhesion of the electrode plate higher than 13.0 N /m, the membrane resistance of the electrode plate lower than 1.6 Ω, the cycling capacity retention rate of the battery higher than 83%, and the internal resistance increase rate of the battery lower than 74%. When the mass fraction of the conductive agent is 1.0%-12%, the conductive binder makes the adhesion of the electrode plate higher than 14.0 N/m, the membrane resistance of the electrode plate lower than 1.4 Ω, the cycling capacity retention rate of the battery higher than 87%, and the internal resistance increase rate of the battery lower than 55%.

It can be seen from Example 1 and Examples 10-15 that when the mass ratio of the conductive binder to the positive electrode active material is 0.4:100-2.8:100, the conductive binder can reduce the membrane resistance of the electrode plate and improve the adhesion of the electrode plate. As a result, the cycling capacity retention rate of the battery is improved, and the internal resistance increase rate of the battery in the cycling process is reduced.

From the comparison of Example 1 and Examples 16-19, it can be seen that when the conductive binder also comprises the structural unit shown in the following formula, the conductive binder further improves the adhesion of the electrode plate, and further decreases the membrane resistance, thereby improving the cycling capacity retention rate of the battery and reducing the internal resistance increase rate of the battery in the cycling process.

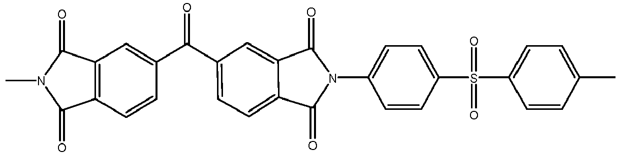

As can be seen from the comparison of Examples 1, 16-18 and Example 19, based on the total number of moles of the structural units, when the molar content of structural units containing -SO₂- in the conductive binder is 0-30%, the conductive binder makes the electrode plate have both low electrode plate membrane resistance and high electrode plate adhesion, and makes the battery have both excellent cycling capacity retention rate and low battery internal resistance increase rate.

It can be seen from Example 1 and Examples 12-17 that when the mass ratio of the conductive binder to the positive electrode active material in the electrode plate is 0.4:100-2.8:100, the conductive binder makes the adhesion of the electrode plate higher than 10 N/m, the membrane resistance of the electrode plate lower than 1.3 Ω, the cycling capacity retention rate of the battery higher than 84%, and the internal resistance increase rate of the battery lower than 70%.

It can be seen from Example 16 and Examples 20-25 that based on the total number of moles of the structural units, when the mass ratio of the conductive binder to the positive electrode active material in the electrode plate is 0.4:100-2.8:100, the molar content of the structural unit comprising -SO₂- in the conductive binder is 12.5%, and the molar content of the structural unit comprising -CF₃ is 37.5%, the conductive binder makes the adhesion of the electrode plate higher than 13 N/m, the membrane resistance of the electrode plate lower than 1.2 Ω, the cycling capacity retention rate of the battery higher than 84%, and the internal resistance increase rate of the battery lower than 69%.

It can be seen from Example 17 and Examples 26-27 that based on the total number of moles of the structural units, when the mass ratio of the conductive binder to the positive electrode active material in the electrode plate is 0.4:100-2.8:100, and the molar content of the structural units comprising -SO₂- in the conductive binder is 25%, the molar content of the structural units comprising -CF₃ is 25%. The conductive binder makes the adhesion of the electrode plate higher than 13 N/m, the membrane resistance of the electrode plate lower than 1.2 Ω, the cycling capacity retention rate of the battery higher than 84%, and the internal resistance increase rate of the battery lower than 73%.

It can be seen from Example 18 and Examples 28-29 that based on the total number of moles of the structural units, when the mass ratio of the conductive binder to the positive electrode active material in the electrode plate is 0.4:100-2.8:100, the molar content of the structural unit comprising -SO₂- in the conductive binder is 30%, and the molar content of the structural unit comprising -CF₃ is 20%, the conductive binder makes the adhesion of the electrode plate higher than 13 N/m, the membrane resistance of the electrode plate lower than 1.4 Ω, the cycling capacity retention rate of the battery higher than 83%, and the internal resistance increase rate of the battery lower than 76%.

It should be noted that the present application is not limited to the embodiments above. The above-described embodiments are merely illustrative, and embodiments having substantively the same composition as the technical idea and exerting the same effects within the scope of the technical solution of the present application are all included in the technical scope of the present application. In addition, without departing from the scope of the subject matter of the present application, various modifications that can be conceived by those skilled in the art are applied to the embodiments, and other modes constructed by combining some of the constituent elements of the embodiments are also included in the scope of the present application.

## Claims

1. A conductive binder, wherein the conductive binder is formed by reacting polyimide with a conductive agent, and the conductive binder comprises a structural unit represented by formula I containing trifluoromethyl, 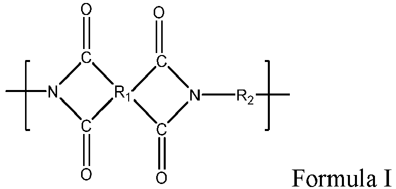 wherein, R₁ and R₂ are each independently selected from substituted C₆-C₂₅ aromatic groups.

2. The conductive binder according to claim 1, wherein the R₁ is an aromatic tetracarboxylic dianhydride residue selected from 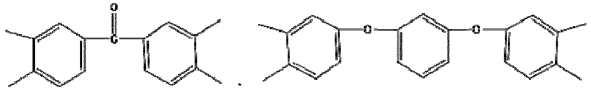 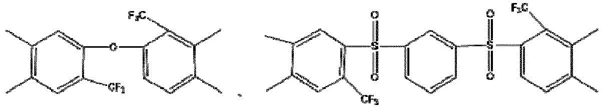 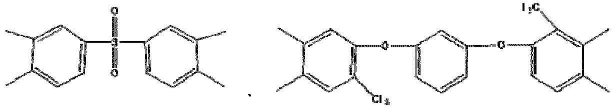 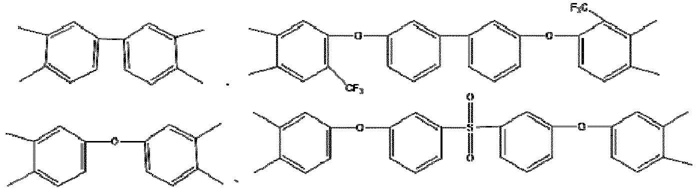 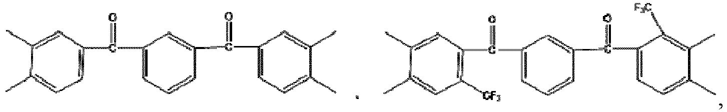 R₂ is an aromatic diamine residue selected from

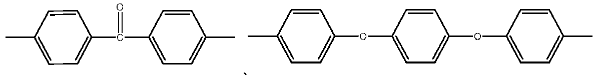

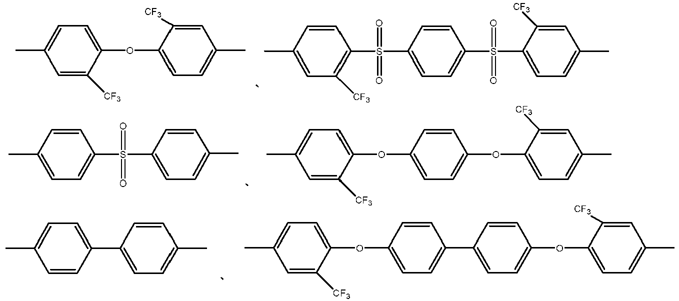

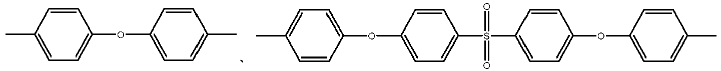

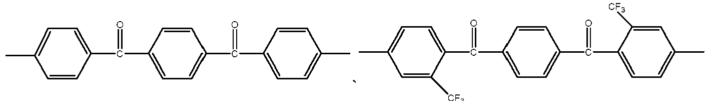

3. The conductive binder according to claim 1 or 2, wherein the molar content of the structural unit represented by formula I containing trifluoromethyl in the conductive binder is 20%-50%, based on the total number of moles of the structural units.

4. The conductive binder according to any one of claims 1-3, wherein the conductive binder further comprises a structural unit represented by formula I containing sulfonyl.

5. The conductive binder according to claim 4, wherein the structural unit represented by formula I containing sulfonyl is selected from 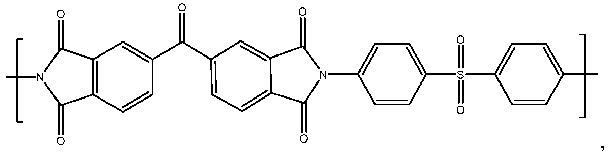 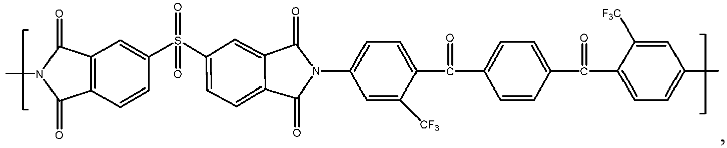 and

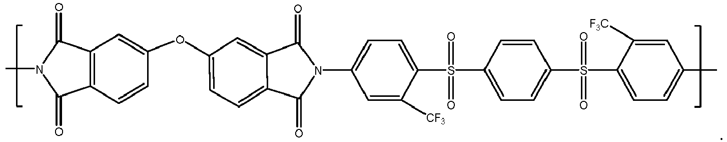

6. The conductive binder according to any one of claims 1 to 5, wherein the molar content of the structural unit represented by formula I containing sulfonyl in the conductive binder is 0.5%-30%, based on the total number of moles of the structural units.

7. The conductive binder according to any one of claims 1-6, wherein the mass fraction of the conductive agent is 0.5%-15%, optionally 1.0%-12%, based on the total mass of conductive binder.

8. The conductive binder according to any one of claims 1 to 7, wherein the surface of the conductive agent contains carboxyl groups, and the conductive agent is selected from one or more of acetylene black, Ketjen black, conductive carbon black, conductive carbon fibers and carbon nanotubes.

9. A preparation method of a conductive binder, comprising the following steps:
mixing monomers represented by formula II and formula III to prepare polyimide comprising trifluoromethyl; 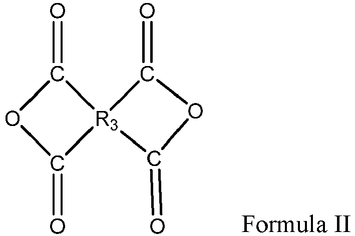
H₂N-R₄-NH₂ Formula III
wherein, R₃ and R₄ are each independently selected from substituted C₆-C₂₅ aromatic groups;
reacting a conductive agent with the polyimide to obtain the conductive binder.

10. The preparation method of a conductive binder according to claim 9, wherein the surface of the conductive agent contains carboxyl groups, and the mass fraction of the conductive agent is 0.5%-15%, optionally 1%-12%, based on the total mass of the conductive binder.

11. The preparation method of a conductive binder according to claim 9 or 10, wherein the preparation of polyimide by mixing monomers represented by formula II and formula III comprises the following steps:
slowly adding a monomer represented by formula II to a solution containing a monomer represented by formula III to react for 4-8 h at room temperature in the presence of a catalyst in a non-reactive gas atmosphere to prepare the polyimide.

12. The preparation method of a conductive binder according to any one of claims 9 to 11, wherein the reacting the conductive agent with the polyimide to obtain the conductive binder comprises the following steps:
slowly adding the carboxylated conductive agent into the polyimide system to react at 105-130°C for 2-6 h, and removing by-products and the catalyst by rotary evaporation to obtain the conductive binder.

13. A positive electrode plate comprising a conductive binder and a positive electrode active material, the conductive binder being the conductive binder according to any one of claims 1 to 8, wherein the mass ratio of the conductive binder to the positive electrode active material is 0.4:100-2.8:100.

14. A secondary battery comprising a positive electrode plate, a separator, a negative electrode plate and an electrolyte solution, wherein the positive electrode plate is the positive electrode plate according to claim 13.

15. A battery module comprising the secondary battery according to claim 14.

16. A battery pack comprising the battery module according to claim 15.

17. An electrical apparatus comprising at least one selected from the secondary battery according to claim 14, the battery module according to claim 15, or the battery pack according to claim 16.
